# EUROPÄISCHE PATENTSCHRIFT

(11) **EP 2 592 264 B1**
(45) Veröffentlichungstag und Bekanntmachung des Hinweises auf die Patenterteilung: **31.12.2014**
(21) Anmeldenummer: 11008966.1
(22) Anmeldetag: 11.11.2011
(51) Int. Cl.: F03D 1/06

(54) **Blattanschluss für ein Rotorblatt einer Windenergieanlage**
Blade connection for a rotor blade of a wind energy assembly
Raccord de pale pour une pale de rotor d'une éolienne

(43) Veröffentlichungstag der Anmeldung: 15.05.2013
(73) Patentinhaber: Nordex Energy GmbH, 22419 Hamburg (DE)
(72) Erfinder: Günther, Christian, 22307 Hamburg (DE)
(74) Vertreter: Hauck Patent- und Rechtsanwälte

(56) Entgegenhaltungen:
- DE-A1-102006 022 272
- GB-A- 2 472 460

## Beschreibung

Die vorliegende Erfindung betrifft einen Blattanschluss für ein Rotorblatt einer Windenergieanlage.

Aus DE 10 2008 021 498 A1 ist ein Verfahren zur Fertigung eines Blattanschlusses eines Rotorblatts für eine Windenergieanlage bekannt, bei dem stückig ausgebildete Befestigungselemente auf einem Kreisbogen angeordnet und mit Abstandselementen voneinander beabstandet werden.

Aus DE 10 2006 022 272 B4 ist ein Rotorblattanschluss für eine Windenergieanlage bekannt geworden, bei dem ein Querstift und eine Verbindungsvorrichtung miteinander in Wirkverbindung bringbar sind. Zur Erhöhung der Biegesteifigkeit des Querstiftes wird vorgeschlagen, diesem in Längsrichtung der Verbindungsvorrichtung einen größeren Querschnitt zu geben.

Aus US 4,412,784 ist ein Rotorblatt bekannt geworden, bei dem ein sich in Längsrichtung des Rotorblatts erstreckender Längsbolzen durch einen quer durch das Rotorblatt geführten Querbolzen gesichert ist. Im Bereich des Längsbolzens ist eine Schicht mit einem ersten Material durch einen Verbundwerkstoff mit kreuzweiser Faserorientierung versteift.

Aus EP 1 798 412 A2 ist ein Blattanschluss für ein Rotorblatt bekannt geworden, bei dem ein Bolzen in Richtung des Rotorblatts, durch einen quer durch das Rotorblatt geführten Querbolzen gesichert ist. Die Aufnahme von dem Längsbolzen ist aus einem Hybridlaminat gebildet, das aus alternierenden Schichten von Glasfasern und Karbonfasern gebildet ist, wobei die Fasern sich in Blattlängsrichtung erstrecken. Aus GB-2472460A ist ein Blattanschluss gemäß dem Oberbegriff des Anspruchs 1 bekannt.

Der Erfindung liegt die Aufgabe zugrunde, mit einfachen Mitteln einen Blattanschluss für ein Rotorblatt einer Windenergieanlage bereitzustellen, der einen stabilen Anschluss auch von langen bis sehr langen Rotorblättern an die Rotornabe erlaubt.

Erfindungsgemäß wird die Aufgabe durch einen Blattanschluss mit den Merkmalen aus Anspruch 1 gelöst. Vorteilhafte Ausgestaltungen bilden die Gegenstände der Unteransprüche.

Der erfindungsgemäße Blattanschluss ist vorgesehen und bestimmt für ein Rotorblatt einer Windenergieanlage, das beispielsweise mit einer Rotornabe oder einer Pitchdrehverbindung verbunden werden kann. Der erfindungsgemäße Blattanschluss kann auch zur Verbindung eines Rotorblattsegments an einem anderen Rotorblattsegment verwendet werden. Der Blattanschluss besitzt sich in Längsrichtung des Rotorblatts erstreckende Aufnahmen für jeweils einen Längsbolzen und jeweils ein mit einem Innengewinde für den Längsbolzen versehenes Bauteil, das in der Aufnahme zur Verbindung mit dem Längsbolzen angeordnet werden kann. Bei der erfindungsgemäßen Ausgestaltung ist das Rotorblatt mindestens im Bereich des Blattanschlusses aus zwei Materialien hergestellt. Erfindungsgemäß ist ein erstes Material vorgesehen, bei dem es sich um ein Verbundmaterial, bevorzugt ein faserverstärktes Verbundmaterial, handelt. Weiterhin ist ein zweites Material vorgesehen, das ein mit mindestens einer Verstärkungsschicht aus Metall und/oder Keramik versehenes Verbundmaterial (Hybridlaminat) ist. Das Hybridlaminat kann zusätzlich zu den Verstärkungsschichten aus Metall und/oder Keramik auch Verstärkungsfasern enthalten. Erfindungsgemäß bestehen die Aufnahmen vollständig aus dem ersten Material. Das erste Material bildet dabei mindestens eine Mantelfläche. Das zweite Material, das eine deutlich größere Steifigkeit als das erste Material besitzt, ist flächig mit der Mantelfläche des ersten Materials verbunden. Dies bedeutet, dass die Aufnahme für den Längsbolzen von dem ersten Material gebildet wird, das flächig mit dem zweiten, Verstärkungsschichten aus Metall und/oder Keramik aufweisenden Material im Bereich des Blattanschlusses verbunden ist. Der Erfindung liegt die Erkenntnis zugrunde, dass sich der Blattanschluss besonders einfach herstellen lässt, wenn die Aufnahme für den Längsbolzen aus einem herkömmlichen Verbundmaterial besteht. Die Versteifung des Blattanschlusses erfolgt über ein mit Verstärkungsschichten aus Metall und/oder Keramik versehenes Hybridlaminat, welches mit dem Verbundlaminat flächig verbunden ist.

In einer weiter bevorzugten Ausgestaltung ist als Bauteil ein Querbolzen mit einer Gewindeöffnung vorgesehen, der in eine quer zur Aufnahme verlaufende Querbolzenaufnahme eingesetzt ist. Der in die Querbolzenaufnahme eingesetzte Querbolzen dient dem Längsbolzen als Widerlager und leitet die angreifenden Kräfte in das Rotorblatt ein.

In einer bevorzugten Ausgestaltung bildet das die Aufnahmen bildende erste Material einen umlaufenden Ring mit einer inneren und einer äußeren Mantelfläche, wobei die innere Mantelfläche zur Innenseite des Rotorblatts und die äußere Mantelfläche zur Außenseite des Rotorblatts weist. Die Innen- und/oder Außenseite des Blattanschlusses wird von dem zweiten Material gebildet, das mit der inneren und/oder äußeren Mantelfläche des ersten Materials verbunden ist. In dieser Ausgestaltung erstreckt sich das erste Material in Umfangsrichtung durchgehend durch die Rotorblattwandung quer zur Querbolzenaufnahme. Das zweite Material bedeckt die innere und/oder äußere Mantelfläche des ersten Materials und bildet die Außen- bzw. Innenseite der Rotorblattwandung, während das erste Material eine Art Kern in Umfangsrichtung des Rotorblatts bildet.

Bevorzugt ist die Wandung der Querbolzenaufnahme mindestens teilweise von dem zweiten Material gebildet. Im Hinblick auf die Stabilität des Blattanschlusses bedeutet dies, dass der Querbolzen mindestens teilweise von einem zweiten Material umgeben ist, das deutlich steifer als das erste, die Aufnahme für den Längsbolzen bildende Material ausgebildet ist.

Bevorzugt ist die Wandung der Querbolzenaufnahme in ihren Endabschnitten von dem zweiten Material gebildet, um den eingesetzten Querbolzen zu sichern. Die Endabschnitte der Querbolzenaufnahme werden dabei von dem zweiten Material gebildet, das außen und/oder innen mit dem die Aufnahme bildenden ersten Material verbunden ist.

In einer zweiten Ausgestaltung ist das Bauteil als eine Hülse mit einem Innengewinde ausgebildet. Die Hülse ist in der Aufnahme für den Längsbolzen in der Rotorwandung angeordnet.

In einer bevorzugten Weiterbildung ist das die Aufnahme bildende erste Material als ein Segment eines Kreiszylinders ausgebildet, wobei jedes Segment eine Innenfläche, eine Außenfläche und zwei Seitenflächen aufweist. Die Hülse kann in an sich bekannter Weise in das erste Material einlaminiert sein. Das zweite Material ist jeweils zwischen zwei benachbarten Seitenflächen zweier Segmente angeordnet und mit diesen verbunden. Entlang der Umfangsrichtung des Blattanschlusses entsteht somit eine Struktur, bei der das erste und das zweite Material abwechselnd angeordnet und die Aufnahmen für die Längsbolzen und die Hülsen jeweils von dem ersten Material gebildet sind. Das zweite Material, das zwischen den Segmenten für die Längsbolzen angeordnet ist, versteift den Blattanschluss in Längsrichtung der Aufnahme. In Umfangsrichtung bildet das zweite Material eine Positionierungshilfe für die Segmente aus dem ersten Material.

In einer bevorzugten Ausgestaltung sind eine Außen- und/oder Innenseite des Rotorblatts von dem ersten Material gebildet, das mit dem zwischen den Segmenten angeordneten zweiten Material und der Außen- und Innenfläche der Segmente aus dem ersten Material verbunden ist.

Bevorzugt besitzt das erste Material einen anisotropen oder orthotropen Aufbau. Die im zweiten Material enthaltenen Verstärkungsschichten verhalten sich isotrop, wodurch das zweite Material quasiisotrope Eigenschaften besitzt.

Die beiden beschriebenen Ausgestaltungen des Bauteils mit Hülse und Querbolzen können auch miteinander kombiniert werden, wobei dann die Hülse zusätzlich ein Außengewinde aufweist, mit dem sie in den Querbolzen geschraubt werden kann.

Die Erfindung wird nachfolgend anhand von zwei Ausführungsbeispielen näher erläutert. Es zeigt
- Fig. 1: einen Schnitt durch eine Rotorblattwandung im Bereich eines Querbolzens,
- Fig. 2: einen Schnitt entlang der Linie A-A aus Fig. 1,
- Fig. 3: einen Schnitt durch die Rotorblattwandung im Bereich einer Hülse und
- Fig. 4: einen Schnitt entlang der Linie B-B aus Fig. 3.

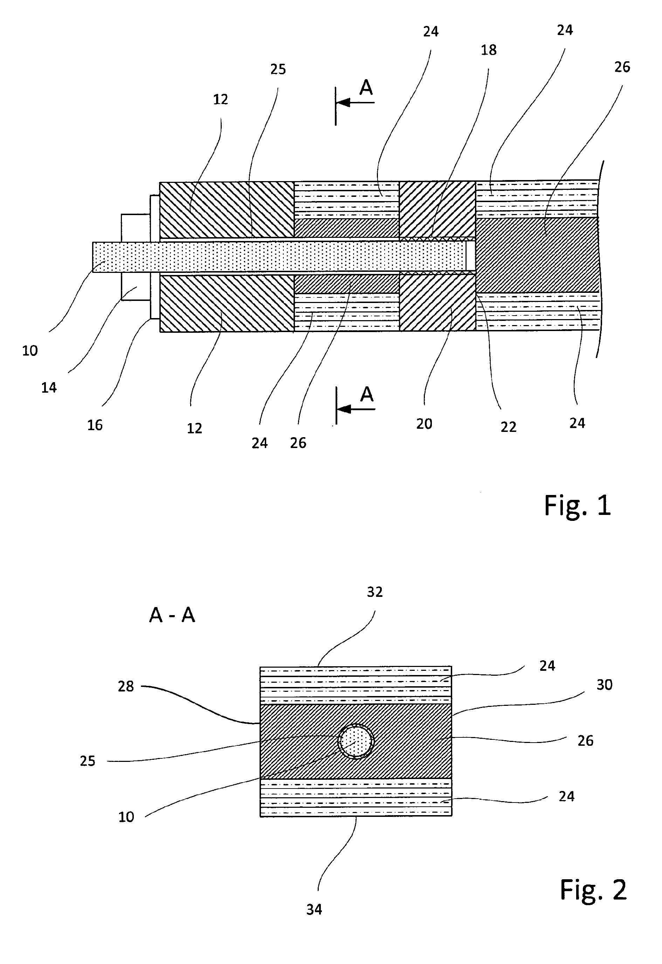

Fig. 1 zeigt einen Schnitt durch einen Rotorblattanschluss, bei dem ein Ring 12 eines Pitchlagers mit Hilfe eines Längsbolzens 10 an einem Rotorblatt befestigt ist. Grundsätzlich ist es auch möglich, den Längsbolzen 10 durch einen entsprechenden Abschnitt der Rotornabe zu führen. Nabenseitig ist der Ring 12 des Pitchlagers durch eine Mutter 14 und eine Unterlegscheibe 16 an dem Längsbolzen 10 gesichert. Der Längsbolzen 10 besitzt an seinem zum Rotorblatt weisenden Ende ein Gewinde 18. Das Gewinde 18 ist in einem Querbolzen 20 verschraubt. Der Querbolzen 20 wird durch eine Querbolzenaufnahme 22 in die Rotorblattwandung quer zur Längsrichtung des Längsbolzens 10 eingesetzt und besitzt eine Bohrung mit einem Innengewinde, mit dem der Längsbolzen 10 verschraubt ist. Die Querbolzenaufnahme erstreckt sich dabei durch die Rotorblattwandung von innen nach außen oder umgekehrt. Sie kann auch als Sackbohrung ausgeführt sein. Die Innen- und Außenseite der Rotorblattwandung zwischen dem Querbolzen 20 und dem Pitchlager 12 besteht aus einem Hybridlaminat 24. Das Hybridlaminat 24 wird aus einem Faserverbundmaterial gebildet, in welches Verstärkungsschichten eingelegt sind. Die Verstärkungsschichten können aus Metall oder Keramik bestehen. Das Hybridlaminat besitzt eine große Steifigkeit. Der Bereich der Aufnahme 25 für den Längsbolzen 10 wird von einem Verbundmaterial 26 gebildet, welches mit Verstärkungsfasern, insbesondere Kohlenstofffasern oder Glasfasern, versehen sein kann.

Blattspitzenseitig des Querbolzens 20 setzt sich das Hybridlaminat 24 über einen vorbestimmten Bereich des Rotorblatts auf der Innen- und Außenseite der Rotorblattwandung fort. In einem nicht dargestellten Bereich des Rotorblatts kann das Hybridlaminat dann auslaufen und durch das Verbundmaterial 26 mit oder ohne Verstärkungsfasern ersetzt werden. In dem sich direkt an den Querbolzen anschließenden blattspitzenseitigen Bereich befindet sich zwischen dem Hybridlaminat 24 das Verbundmaterial 26, welches den blattspitzenseitigen Raum hinter dem Querbolzen 20 vollständig ausfüllt.

Fig. 2 zeigt einen Schnitt entlang der Linie A-A aus Fig. 1. Deutlich zu erkennen ist der in der Aufnahme 25 geführte Längsbolzen 10. Die Aufnahme 25 ist vollständig von dem Verbundmaterial 26 umgeben. Hierbei ist zu beachten, dass die Darstellung in Fig. 2 zweifach geschnitten ist und der Blattanschluss sich an den Kanten 28 und 30 in Umfangsrichtung umlaufend fortsetzt, so dass Seite 32 beispielsweise die Außenseite und Seite 34 dann die Innenseite des Rotorblatts bildet. Fig. 2 zeigt, dass der innere und der äußere Bereich der Rotorblattwandung im Bereich des Blattanschlusses von dem Hybridlaminat 24 gebildet ist, das flächig mit dem Verbundmaterial 26 verbunden ist.

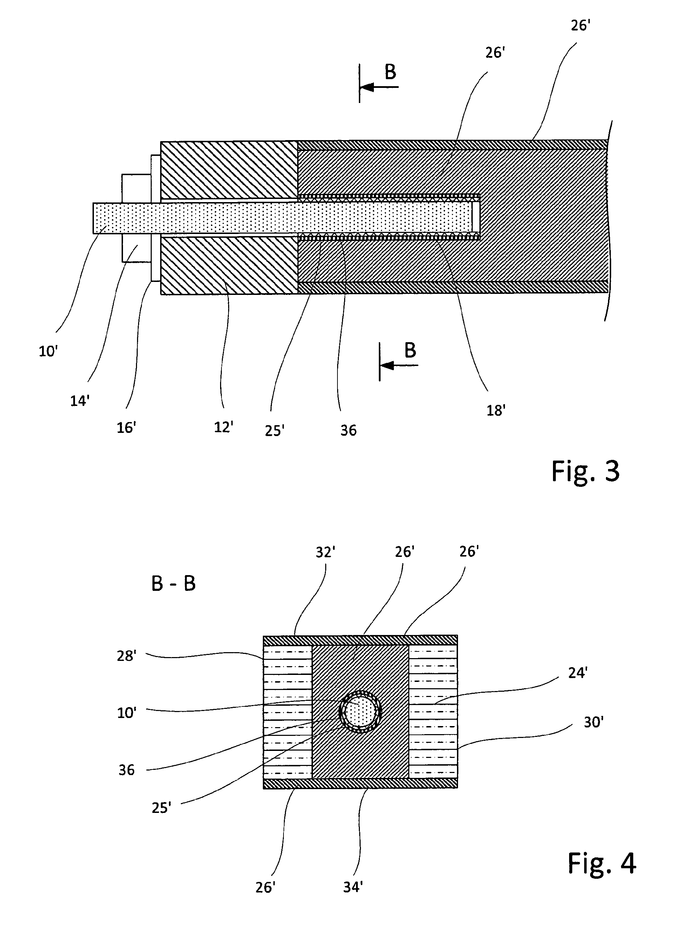

Fig. 3 zeigt eine alternative Ausgestaltung eines Rotorblattanschlusses, bei der der Längsbolzen 10' in einer Hülse 36' über ein Gewinde 18' verschraubt ist. Der Längsbolzen 10' ist durch einen Innenring oder Außenring eines Pitchlagers 12' geführt. Das Pitchlagers 12' ist an dem rotornabenseitigen Ende des Längsbolzens 10' über eine Mutter 14' und eine Unterlegscheiben 16' gesichert.

Die Hülse 36 ist in der Aufnahme 25' für den Längsbolzen 10' angeordnet und erstreckt sich zum rotornabenseitigen Ende des Rotorblatts. Die Hülse 36 ist in ein Verbundmaterial 26' einlaminiert, das ein Segment der im wesentlichen kreiszylindrischen Rotorblattwandung bildet. Umgeben ist das Verbundmaterial 26' in radialer Richtung von einer Deckschicht aus dem gleichen oder einem anderen herkömmlichen Verbundmaterial 26', das die Außenseite 32' und die Innenseite 34' der Rotorblattwandung bildet.

Fig. 4 zeigt einen Schnitt entlang der Linie B-B aus Fig. 3. Die Innenhülse 36 mit dem Längsbolzen 10' ist in eine Aufnahme aus Verbundmaterial 26' eingebettet. Die Aufnahme ist als Segment eines Kreiszylinders ausgebildet. Das Verbundmaterial 26' umschließt die Hülse 36 vollständig und bildet eine Mantelfläche. Auch die Darstellung in Fig. 4 ist zweifach geschnitten, so dass sich der Blattanschluss an den Kanten 28' und 30' in Umfangsrichtung umlaufend fortsetzt. Die Seite 32 bildet beispielsweise die Außenseite und die Seite 34 die Innenseite der Rotorblattwandung. Das Hybridlaminat 24' ist, wie in Fig. 4 zu erkennen, in Umfangsrichtung des Blattanschlusses zwischen zwei benachbarten Segmenten mit den Aufnahmen 25' angeordnet, wobei das Hybridlaminat 24' flächig mit der Seitenfläche der die Aufnahme 25' umgebenden Segmente verbunden ist. Die Außenseite 32' und die Innenseite 34' der Rotorblattwandung werden von einer Schicht aus Verbundmaterial 26' bedeckt.

In einem in Fig. 3 nicht dargestellten Bereich der Rotorblattwandung kann das Hybridlaminat 24' in seiner Dicke auslaufen, bevorzugt keilförmig, so dass die Rotorblattwandung dann vollständig von dem Verbundmaterial 26' gebildet ist.

## Patentansprüche

1. Blattanschluss für ein Rotorblatt einer Windenergieanlage mit mehreren sich in Längsrichtung des Rotorblatts erstreckenden Aufnahmen (25), die jeweils einen Längsbolzen (10) und ein mit einem Innengewinde für den Längsbolzen (10) versehenes Bauteil (20; 36) aufnehmen können, wobei das Rotorblatt mindestens im Bereich des Blattanschlusses aus zwei Materialien hergestellt ist, wobei ein erstes Material (26) ein Verbundmaterial ist ,**dadurch gekennzeichnet, dass** ein zweites Material (24) ein mit mindestens einer Verstärkungsschicht aus Metall und/oder Keramik versehenes Verbundmaterial ist, wobei die Aufnahmen (25) aus dem ersten Material (26) bestehen und das zweite Material (24) mit dem ersten Material verbunden ist.

2. Blattanschluss nach Anspruch 1, **dadurch gekennzeichnet, dass** das erste Material (26) ein faserverstärktes Verbundmaterial ist.

3. Blattanschluss nach Anspruch 1 oder 2, **dadurch gekennzeichnet, dass** als Bauteil ein Querbolzen (20) mit einer Gewindeöffnung vorgesehen ist, der in eine quer zur Aufnahme verlaufende Querbolzenaufnahme (22) eingesetzt ist.

4. Blattanschluss nach Anspruch 3, **dadurch gekennzeichnet, dass** das die Aufnahme bildende erste Material (26) kreiszylinderförmig in dem Blattanschluss umläuft und eine innere und eine äußere Mantelfläche aufweist, und dass das ebenfalls kreiszylinderförmig umlaufende zweite Material (24) mit der inneren und/oder äußeren Mantelfläche des ersten Materials verbunden ist.

5. Blattanschluss nach Anspruch 3 oder 4, **dadurch gekennzeichnet, dass** die Wandung der Querbolzenaufnahme mindestens teilweise von dem zweiten Material gebildet ist.

6. Blattanschluss nach Anspruch 5, **dadurch gekennzeichnet, dass** die Wandung der Querbolzenaufnahme mindestens in ihren Endabschnitten von dem zweiten Material gebildet ist.

7. Blattanschluss nach Anspruch 1 oder 2, **dadurch gekennzeichnet, dass** das Bauteil als eine Hülse (36) mit einem Innengewinde ausgebildet und in der Aufnahme (25) angeordnet ist.

8. Blattanschluss nach Anspruch 7, **dadurch gekennzeichnet, dass** das die Aufnahme (25) bildende erste Material (26) als ein Segment eines Kreiszylinders ausgebildet ist, das jeweils eine Innenfläche, eine Außenfläche und zwei Seitenflächen aufweist, und dass das zweite Material (24') jeweils zwischen zwei benachbarten Seitenflächen zweier Segmente angeordnet und mit diesen verbunden ist.

9. Blattanschluss nach Anspruch 8, **dadurch gekennzeichnet, dass** eine Außen- und/oder Innenseite des Rotorblatts von dem ersten Material (26) gebildet ist, das mit dem das Segment bildenden ersten Material und/oder mit dem zwischen den Segmenten angeordneten zweiten Material verbunden ist.

## Claims

1. A blade connection for a rotor blade of a wind turbine having a plurality of receptacles (25) which extend in the longitudinal direction of the rotor blade and can each receive a longitudinal bolt (10) and a component part (20; 36) which is provided with an inner thread for the longitudinal bolt (10), wherein the rotor blade is made of two materials at least in the region of the blade connection, wherein a first material (26) being a composite material, **characterised in that** a second material (24) is a composite material provided with at least one reinforcement layer of metal and/or ceramics, wherein the receptacles (25) are made of the first material (26), and the second material (24) is connected to the first material.

2. The blade connection according to claim 1, **characterised in that** the first material (26) is a fibre-reinforced composite material.

3. The blade connection according to claim 1 or 2, **characterised in that** a cross bolt (20) with a threaded opening is provided as component part, which is inserted into a cross bolt receptacle (22) running crosswise with respect to the receptacle.

4. The blade connection according to claim 3, **characterised in that** the first material (26) forming the receptacle extends in the shape of a circular cylinder in the blade connection and has an inner and an outer lateral surface, and that the second material (24), also extending in the shape of a circular cylinder, is connected to the inner and/or the outer lateral surface of the first material.

5. The blade connection according to claim 3 or 4, **characterised in that** the wall of the cross bolt receptacle is at least partially formed by the second material.

6. The blade connection according to claim 5, **characterised in that** the wall of the cross bolt receptacle is formed by the second material at least in its end portions.

7. The blade connection according to claim 1 or 2, **characterised in that** the component part is formed as a sleeve (36) with an inner thread and is arranged in the receptacle (25).

8. The blade connection according to claim 7, **characterised in that** the first material (26) forming the receptacle (25) is configured as a segment of a circular cylinder, the segment having one inner surface, one outer surface and two lateral surfaces, and that the second material (24') is arranged between two neighbouring lateral surfaces of two segments and connected to the same.

9. The blade connection according to claim 8, **characterised in that** an outer side and/or inner side of the rotor blade is formed by the first material (26), which is connected to the first material which forms the segment, and/or to the second material, which is arranged between the segments.

## Revendications

1. Raccord de pale pour une pale de rotor d'une éolienne, avec plusieurs logements (25) s'étendant dans le sens longitudinal de la pale de rotor, dont chacun peut recevoir un goujon longitudinal (10) et un composant (20; 36) pourvu d'un filet femelle pour le goujon longitudinal (10), la pale de rotor étant faite de deux matériaux au moins dans la région du raccord de pale, un premier matériau (26) étant un matériau composite, **caractérisé en ce qu'**un deuxième matériau (24) est un matériau composite pourvu d'au moins une couche de renforcement de métal et/ou de céramique, les logements (25) consistant du premier matériau (26) et le deuxième matériau (24) étant connecté au premier matériau.

2. Raccord de pale selon la revendication 1, **caractérisé en ce que** le premier matériau (26) est un matériau composite renforcé par des fibres.

3. Raccord de pale selon la revendication 1 ou 2, **caractérisé en ce que** un goujon transversal (20) avec une ouverture filetée est pourvu comme le composant, qui est inséré dans un logement de goujon transversal (22) s'étendant transversalement au logement.

4. Raccord de pale selon la revendication 3, **caractérisé en ce que** le premier matériau (26) formant le logement s'étend en forme d'un cylindre circulaire dans le raccord de pale et a une surface enveloppe intérieure et une surface enveloppe extérieure, et que le deuxième matériau (24), aussi s'étendant en forme d'un cylindre circulaire, est connecté à la surface enveloppe intérieure et/ou extérieure du premier matériau.

5. Raccord de pale selon les revendications 3 ou 4, **caractérisé en ce que** la paroi du logement du goujon transversal est au moins partiellement formée par le deuxième matériau.

6. Raccord de pale selon la revendication 5, **caractérisé en ce que** la paroi du logement du goujon transversal est formée par le deuxième matériau au moins dans ses parties d'extrémité.

7. Raccord de pale selon la revendication 1 ou 2, **caractérisé en ce que** le composant est formé comme une douille (36) avec un filet femelle et est agencé dans le logement (25).

8. Raccord de pale selon la revendication 7, **caractérisé en ce que** le premier matériau (26) formant le logement (25) est réalisé comme un segment d'un cylindre circulaire qui a une surface intérieure, une surface extérieure et deux surfaces latérales, et que le deuxième matériau (24') est agencé entre deux surfaces latérales avoisinantes de deux segments et connecté à celles-ci.

9. Raccord de pale selon la revendication 8, **caractérisé en ce qu'**un côté extérieur et/ou intérieur de la pale de rotor est formé par le premier matériau (26), qui est connecté au premier matériau formant le segment et/ou au deuxième matériau qui est agencé entre les segments.
